# EUROPÄISCHE PATENTSCHRIFT

(11) **EP 2 895 750 B1**
(45) Veröffentlichungstag und Bekanntmachung des Hinweises auf die Patenterteilung: **08.11.2017**
(21) Anmeldenummer: 13770419.3
(22) Anmeldetag: 17.09.2013
(51) Int. Cl.: F16B 3/04, F16B 5/00

(54) **VORRICHTUNG ZUM VERBINDEN VON BAUTEILEN**
DEVICE FOR CONNECTING COMPONENTS
DISPOSITIF D'ASSEMBLAGE DE COMPOSANTS

(30) Priorität: 17.09.2012 DE 202012008847 U; 06.12.2012 DE 202012011684 U
(43) Veröffentlichungstag der Anmeldung: 22.07.2015
(73) Patentinhaber: Leiseder, Ulrich, 21465 Reinbek (DE)
(72) Erfinder: Leiseder, Ulrich, 21465 Reinbek (DE)
(74) Vertreter: Ter Meer Steinmeister & Partner
(86) Internationale Anmeldenummer: PCT/EP2013/069290
(87) Internationale Veröffentlichungsnummer: WO 2014/041197

(56) Entgegenhaltungen:
- EP-A2- 1 975 335
- EP-A2- 2 273 048

## Beschreibung

Die Erfindung betrifft eine Vorrichtung zum Verbinden von zwei Bauteilen, die Eingriffsstrukturen an zwei einander zugewandten Verbindungsflächen aufweisen, wobei die Bauteile mindestens zwei Paare von einander gegenüberliegenden kreisbogenförmigen Eingriffsstrukturen aufweisen, die sich jeweils über einen Bogenwinkel von nicht mehr als 180° erstrecken, jeweils mindestens ein offenes Ende haben und so angeordnet sind, dass der Kreisbogenmittelpunkt der Eingriffstrukturen eines Paares vom Kreisbogenmittelpunkt der Eingriffsstrukturen jedes anderen Paares verschieden ist, und mindestens zwei Verbinder vorgesehen sind, die jeweils zu den Eingriffsstrukturen eines Paares komplementäre Eingriffsstrukturen aufweisen.

Es sind gewindefreie Verbindungsvorrichtungen bekannt, beispielsweise Steckverbindungen oder sogenannte Hirth-Verbindungen, die es erlauben, die beiden Bauteile in allen drei Freiheitsgraden der Bewegung in der Richtung parallel zur Ebene der Verbindungsflächen formschlüssig aneinander zu fixieren. Zum Herstellen einer solchen Verbindung ist jedoch eine Relativbewegung der beiden Bauteile in der zu den Verbindungsflächen senkrechten Richtung erforderlich.

Andererseits sind Flanschverbindungen bekannt, bei denen zwar eine Relativbewegung der Bauteile in Richtung senkrecht zur Ebene der Flansche nicht zwingend erforderlich ist, aber Freiräume vorhanden sein müssen, die es erlauben, Bolzen zur Verbindung der Flansche in entsprechende Bolzenlöcher einzustecken oder zu -schrauben. Diese Bolzen müssen dabei in der Richtung senkrecht zur Ebene der Flansche bewegt werden.

Aus EP 2 273 048 B1 ist eine Verbindungsvorrichtung mit kreisbogenförmigen Eingriffsstrukturen und zugehörigen Verbindern bekannt, die eine relative Verdrehung der Bauteile zulässt.

Eine Verbindungsvorrichtung nach dem Oberbergriff des Anspruchs 1 ist aus EP 1 975 335 A2 bekannt. Die zu verbindenden Bauteile sind Fliesen, deren aneinander anliegende Kanten die Verbindungsflächen bilden. Die Verbinder werden von oben in die kreisförmigen Eingriffsstrukturen eingelegt, die in den Oberseiten der Fliesen gebildet sind.

Aufgabe der Erfindung ist es, eine Verbindungsvorrichtung zu schaffen, die es erlaubt, die Bauteile in allen drei Freiheitsgraden der Bewegung in der Richtung senkrecht zu ihren Verbindungsflächen formschlüssig aneinander zu fixieren, und bei der zum Herstellen der Verbindung keinerlei Bewegung in der zu den Verbindungsflächen senkrechten Richtung erforderlich ist.

Diese Aufgabe wird erfindungsgemäß dadurch gelöst, dass die kreisförmigen Eingriffsstrukturen in den Verbindungflächen liegen und dass die Verbinder von den offenen Enden her in die Eingriffsstrukturen des Paares hineindrehbar sind.

Vorteilhafte Ausgestaltungen und Weiterbildungen der Erfindung sind in den Unteransprüchen angegeben.

Im folgenden werden Ausführungsbeispiele anhand der Zeichnung näher erläutert.

Es zeigen:
- Fig. 1: eine perspektivische Ansicht einer erfindungsgemäßen Verbindungsvorrichtung;
- Fig. 2: eine Ansicht von Teilen der Vorrichtung nach Fig. 1;
- Fig. 3 bis 5: Ansichten einer Verbindungsvorrichtung gemäß einem anderen Ausführungsbeispiel und von Teilen derselben;
- Fig. 6: ein Anwendungsbeispiel für die Verbindungsvorrichtung nach Fig. 1;
- Fig. 7: einen schematischen Grundriss einer Verbindungsvorrichtung gemäß einem weiteren Ausführungsbeispiel;
- Fig. 8: ein weiteres Anwendungsbeispiel für die Verbindungsvorrichtung nach Fig. 1;
- Fig. 9: eine Verbindungsvorrichtung gemäß einem anderen Ausführungsbeispiel;
- Fig. 10 bis 13: weitere Anwendungsbeispiele der Erfindung;
- Fig. 14: einen Verbinder einer Vorrichtung gemäß einem weiteren Ausführungsbeispiel;
- Fig. 15: einen Verbinder für eine Vorrichtung zum verspannenden Verbinden von Bauteilen;
- Fig. 16: Prinzipskizzen zu Fig. 15;
- Fig. 17 und 18: einen mehrteiligen Verbinder für verspannende Verbindungen;
- Fig. 19: einen Verbinder gemäß einem weiterem Ausführungsbeispiel;
- Fig. 20 bis 23: weitere Ausführungsbeispiele für Verbindungsvorrichtungen zum verspannenden Verbinden von Bauteilen;
- Fig. 24: eine teilweise aufgeschnittene Ansicht einer Verbindungsvorrichtung mit einer anderen Ausführungsform der Verbinder;
- Fig. 25: einen Verbinder mit einer Montagehilfe; und
- Fig. 26 und 27: ein weiteres Ausführungsbeispiel einer Verbindungsvorrichtung mit Montagehilfe.

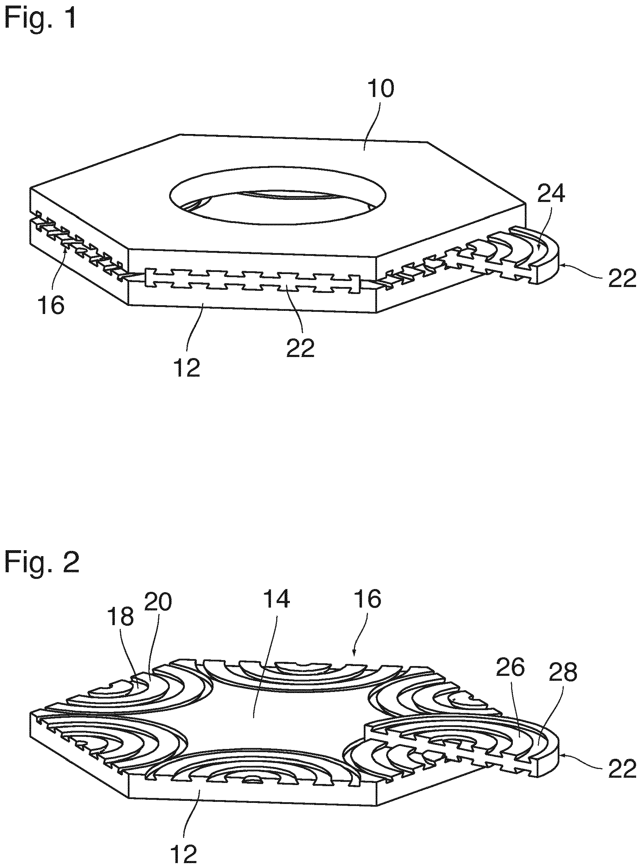

In Fig. 1 und 2 ist eine Verbindungsvorrichtung dargestellt, die dazu dient, zwei Bauteile 10 und 12 miteinander zu verbinden. Die Bauteile 10 und 12 haben im gezeigten Beispiel die Form flacher Flansche mit sechs-eckigem Umriss, können jedoch im Prinzip eine beliebige Form haben. Entscheidend ist lediglich, dass die beiden Bauteile 10, 12 zwei einander zugewandte Verbindungsflächen 14 (Fig. 2) aufweisen, die zumindest näherungsweise eben sind. In diesen Verbindungsflächen 14 sind kreisbogenförmige Eingriffstrukturen 16 gebildet, die in diesem Beispiel die Form von Scharen halbkreisförmiger, konzentrischer Nuten 18 und dazwischen stehengebliebener Rippen 20 haben.

Im gezeigten Beispiel sind die Eingriffsstrukturen 16 der beiden Bauteile 10, 12 symmetrisch ausgebildet, doch ist dies nicht zwingend. Wesentlich ist nur, dass die Eingriffstrukturen an den beiden Bauteilen 10, 12 einander paarweise gegenüberliegen, wobei die Kreisbogenmittelpunkte zumindest grob miteinander ausgerichtet sein sollten.

Jedem Paar von Eingriffsstrukturen 16 ist ein Verbinder 22 zugeordnet, der zu den beiden Eingriffsstrukturen 16 dieses Paares komplementäre Eingriffsstrukturen 24 aufweist, im gezeigten Beispiel (Fig. 2) in der Form von Rippen 26 mit einem zu den Nuten 28 komplementären Profil und Nuten 28 mit einem zu den Rippen 20 komplementären Profil.

Die Verbinder 22 sind im gezeigten Beispiel als halbkreisförmige Scheiben gestaltet und lassen sich, wie in Fig. 1 und 2 jeweils auf der rechten Seite gezeigt ist, in die einander gegenüberliegenden Eingriffsstrukturen 16 und des betreffenden Paares hineindrehen. In Fig. 1 ist auf der dem Betrachter zugewandten Seite der Bauteile 10, 12 ein Verbinder 22 gezeigt, der ganz eingedreht ist, so dass er die Nuten 18 der Verbindungsstrukturen 16 vollständig ausfüllt und seine dem Halbkreisdurchmesser entsprechende Stirnfläche mit den Seitenflächen der Bauteile 10, 12 bündig ist. Auf der linken Seite im Fig. 1 sind offene Eingriffsstrukturen 16 ohne Verbinder gezeigt.

Durch das Ineinandergreifen der kreisbogenförmigen Nuten 18, 28 und Rippen 20, 26 sind die beiden Bauteile formschlüssig aneinander fixiert, so dass sie sich in der Richtung parallel zu den Verbindungsflächen 14 nicht gegeneinander verschieben lassen. Wenn zumindest zwei Verbinder 22 in die zugehörigen Paare von Eingriffsstrukturen eingedreht sind, lassen sich die Bauteile 10 und 12 auch nicht mehr relativ zueinander verdrehen.

Im gezeigten Beispiel haben die Nuten 18, 28 hinterschnittene Profile (Schwalbenschwanzprofile), so dass die Bauteile 10, 12 durch den Eingriff der Rippen 20, 26 in diese Nuten auch in der Richtung senkrecht zu den Verbindungsflächen 14 (in der Vertikalen in Fig. 1 und 2) formschlüssig aneinander fixiert werden. Wenn eine Fixierung in dieser Richtung nicht erforderlich ist, können die Eingriffsstrukturen jedoch auch frei von Hinterschnitten sein.

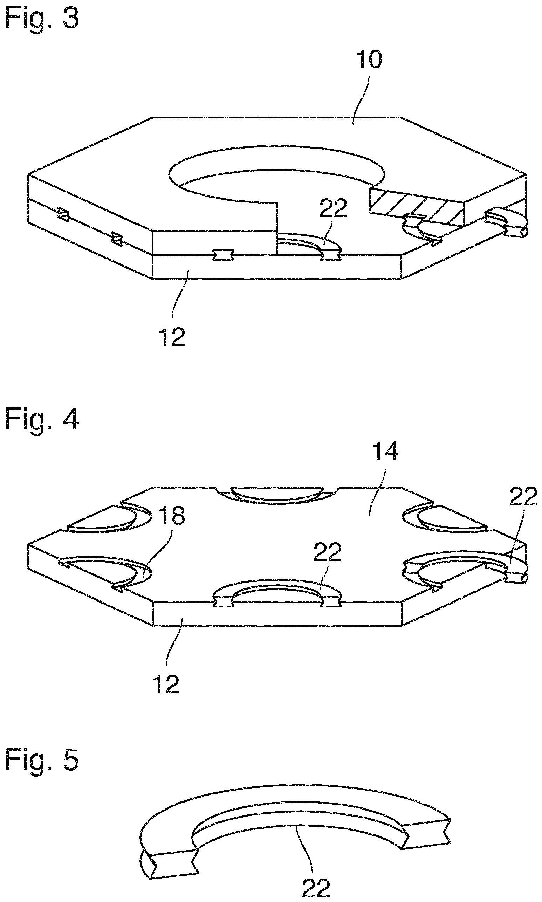

Fig. 3 bis 5 zeigen ein Ausführungsbeispiel, das sich von dem zuvor beschriebenen Beispiel dadurch unterscheidet, dass die Verbindungsstrukturen in den Bauteilen 10, 12 jeweils nur durch eine einzelne Nut 18 gebildet werden und die zugehörigen Verbinder 22 als einfache Halbringe mit Doppel-Schwalbenschwanzprofil ausgebildet sind.

In beiden Ausführungsformen lassen sich die Eingriffsstrukturen 16 einfach und mit hoher Präzision z.B. durch Fräsen herstellen, und die dazu komplementären Eingriffsstrukturen 24 der Verbinder 22 lassen sich beispielsweise durch Formguss herstellen, so dass eine gute Passung und ein entsprechend spielarmer und dennoch leichtgängiger Eingriff der Eingriffsstrukturen erreicht wird. Wahlweise kann jedoch auch bewusst ein gewisses Spiel der Eingriffsstrukturen zugelassen werden, und/oder an den Enden der Nuten und Rippen können Einlaufschrägen oder dergleichen vorgesehen sein. Ebenso ist es denkbar, die Rippen elastisch auszubilden, beispielsweise jeweils in der Form zweier Zungen, die sich unter Vorspannung an die zugehörigen Nutflanken anlegen, so dass eine Spielbeseitigung erreicht wird.

Durch Wahl der Anzahl und Dimensionierung der Eingriffsstrukturen 16 lässt sich die Festigkeit der Verbindung zwischen den Bauteilen 10 und 12 nach Bedarf einstellen.

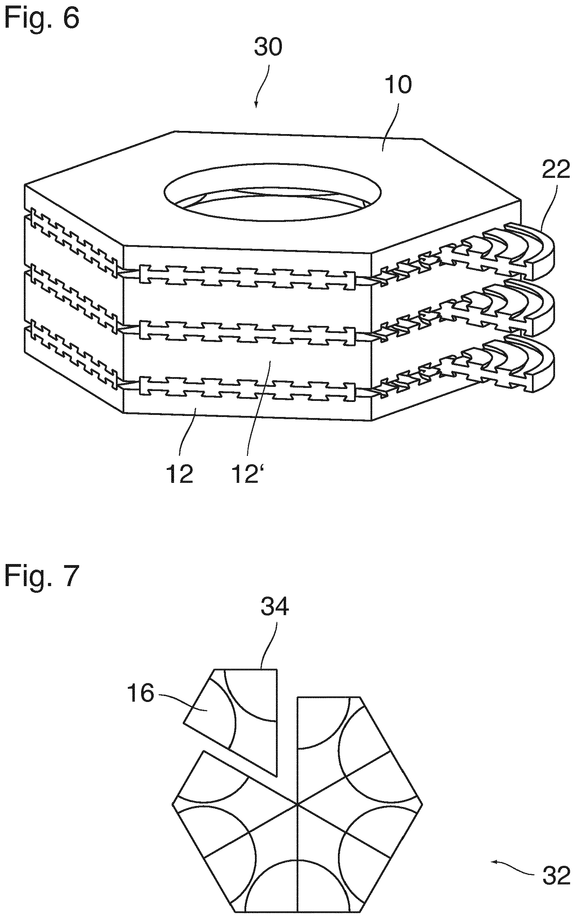

So kann die Verbindungsvorrichtung beispielsweise dazu benutzt werden, verhältnismäßig großbauende Maschinenteile, auch wenn es sich um hochbelastete Teile wie beispielsweise Wellen handelt, aus mehreren Segmenten zusammenzusetzen. Als Beispiel zeigt Fig. 6 eine sechskantige Welle 30, die stapelförmig aus den Bauteilen 10, 12 sowie weiteren umrissgleichen Bauteilen 12' zusammengesetzt ist, wobei die Verbindungen jeweils durch Verbinder 22 gebildet werden. Die zwischengefügten Bauteile 12' weisen zu diesem Zweck Verbindungsstrukturen 16 sowohl an der Oberseite als auch an der Unterseite auf.

Die kreisbogenförmigen Eingriffsstrukturen 16 und 24 müssen nicht halb-kreisförmig sein, sondern können auch kleinere Kreisbögen beschreiben. Fig. 7 zeigt schematisch einen Grundriss eines sechskantigen Prismenkörpers 32, der aus tortenstückartigen vierkantigen Prismen 34 zusammengesetzt ist. Die nur schematisch gezeigten Eingriffsstrukturen 16 haben in diesem Fall die Form von Viertelkreisen und dienen dazu, mehrere der Prismen 34 analog zu Fig. 6 zu einem Stapel zusammenzufügen. Die Verbindung der Prismen 34 zu dem sechskantigen Prismenkörper 32 kann hier mit anderen, nicht gezeigten Verbindungsmitteln erfolgen.

Wenn jedoch in Fig. 7 statt viertelkreisförmiger Verbinder die halbkreisförmigen Verbinder nach Fig. 6 benutzt werden, so lassen sich mit Hilfe dieser Verbinder, die dann jeweils und je Seite in die Eingriffsstrukturen zweier Prismen 34 eingreifen, zugleich auch die in derselben Stapelebene liegenden Prismen miteinander verbinden.

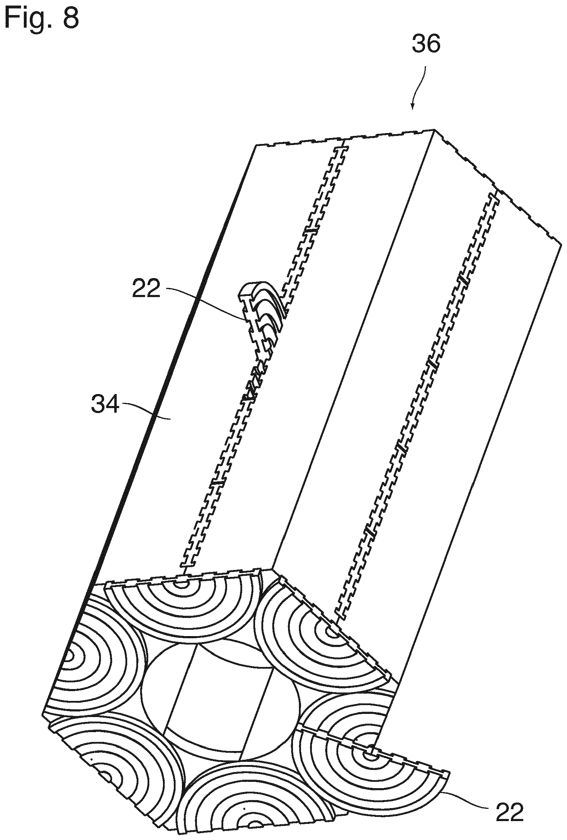

Fig. 8 zeigt einen sechskantigen Prismenkörper 36, der ähnlich wie in Fig. 7 aus mehreren in Umfangsrichtung und in Längsrichtung zusammengefügten Prismen 34 zusammengesetzt ist, wobei erfindungsgemäße Verbindungsvorrichtungen mit Verbindern 22 nicht nur dazu dienen, die Prismen 34 in Längsrichtung miteinander zu verbinden, sondern auch dazu, die Prismen in Umfangsrichtung miteinander zu verbinden.

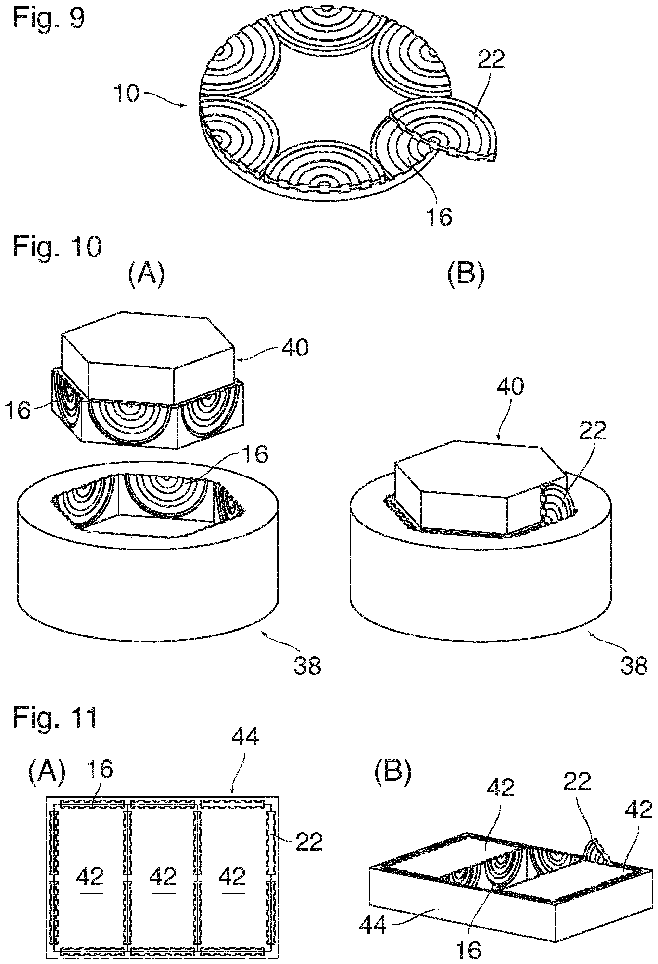

Wie Fig. 9 zeigt, ermöglicht die Erfindung auch die stapelförmige Verbindung runder Bauteile 10. Die Verbindungsstrukturen 16 und die Verbinder 22 haben dann nicht die Form von Halbkreisen, sondern sind auf der Seite, die die Enden des Kreisbogens miteinander verbindet, an die gekrümmte Kontur des Bauteils 10 angepasst, so dass sie im völlig eingedrehten Zustand bündig mit der Umfangsfläche des Bauteils 10 abschließen.

Fig. 10 (A) ist eine Darstellung einer Zapfenverbindung zwischen einer zylindrischen Welle 38 und einer polygonalen Welle 40 mit Hilfe von Eingriffsstrukturen 16, die an den Außenflächen der Welle 40 und im Zapfenloch der Welle 38 gebildet sind.

Fig. 10 (B) zeigt dieselbe Zapfenverbindung im nahezu vollständig fertiggestellten Zustand.

Fig. 11A zeigt in einer Grundrissdarstellung die Verwendung erfindungsgemäßer Verbindungsvorrichtungen zur Fixierung dreier quaderförmiger Körper 42 nebeneinanderliegend in einem kastenförmigen Gehäuse 44. Die Verbindungsvorrichtung mit Eingriffsstrukturen 16 und Verbindern 22 dient hier einerseits dazu, die Körper 42 an den Innenwänden des Gehäuses 44 zu fixieren, und dient zugleich dazu, die Körper 42 an den aneinander anliegenden Flächen miteinander zu verbinden. Auf diese Weise wird eine äußerst stabile Sicherung der Körper 42 in dem Gehäuse 44 erreicht. Fig. 11 (B) zeigt eine perspektivische Ansicht des Gehäuses 44 mit zweien der Körper 42.

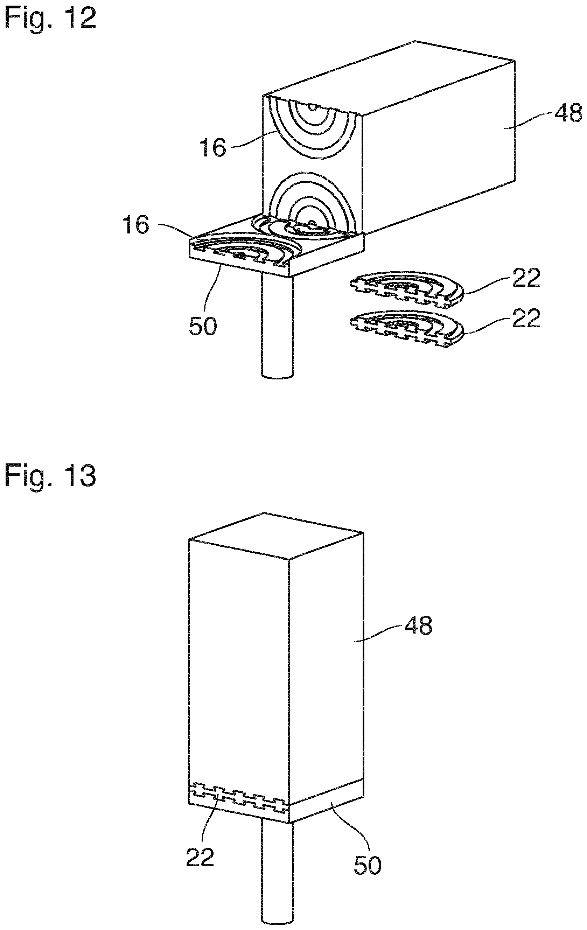

Fig. 12 und 13 illustrieren eine einfache Anwendung der erfindungsgemäßen Vorrichtung mit nur zwei Verbindern 22 für einen beispielsweise aus Holz bestehenden Pfosten 48 und einen zugehörigen Pfostenanker 50 aus Metall.

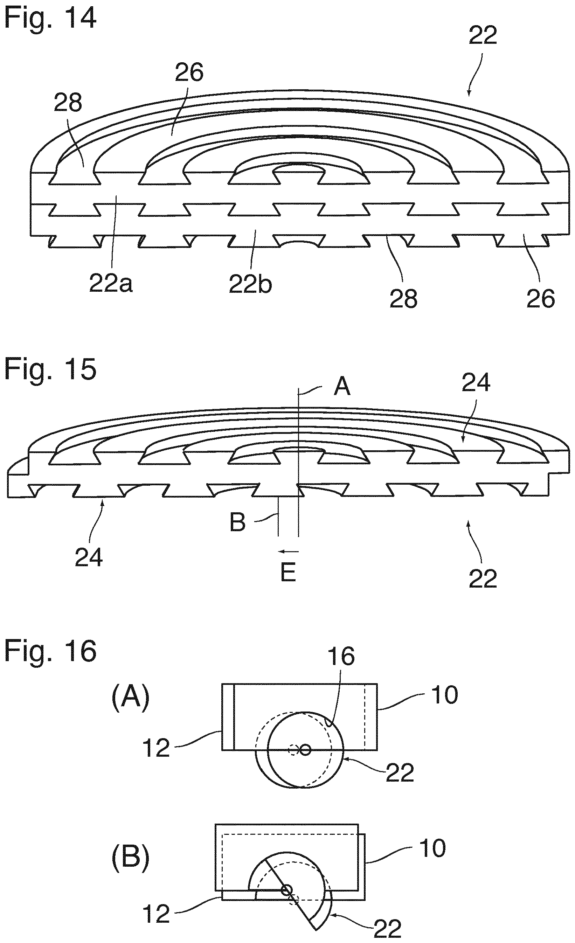

Während bei den bisher beschriebenen Ausführungsbeispielen jedem Paar von Eingriffsstrukturen 16 ein einteiliger Verbinder 22 zugeordnet ist, sind auch Vorrichtungen denkbar, bei denen ein mehrteiliger Verbinder 22 verwendet wird, wie er in Fig. 14 gezeigt ist. Dieser Verbinder wird durch zwei halbkreisförmige Scheiben 22a und 22b gebildet, die jeweils Eingriffsstrukturen in der Form von Rippen 26 und Nuten 28 auf beiden Seiten haben und sich somit auf die gleiche Weise ineinander drehen lassen wie die Verbinder 22 in die Eingriffsstrukturen 16. In dem in Fig. 14 gezeigten Beispiel sind die beiden Scheiben 22a und 22b formidentisch, und die Eingriffsstrukturen auf den entgegengesetzten Seiten derselben Scheibe sind nicht symmetrisch, sondern komplementär. Im Bedarfsfall ist es deshalb auch möglich, Verbinder mit drei oder mehr Scheiben zu bilden, die alle auf die gleiche Weise stapelförmig miteinander in Eingriff gebracht werden können. Es versteht sich, dass der in Fig. 14 gezeigte Verbinder 22 zusammen mit Bauteilen verwendet wird, deren Eingriffsstrukturen 16 ebenfalls nicht symmetrisch, sondern komplementär zu einander sind.

Fig. 15 zeigt einen Verbinder 22 in der Form einer einzelnen Scheibe, bei dem die Eingriffsstrukturen 24 auf der Oberseite und der Unterseite leicht exzentrisch zueinander angeordnet sind. Die Eingriffsstruktur auf der Oberseite wird durch Nuten und Rippen gebildet, die auf eine Achse A zentriert sind, während die Nuten und Rippen der Eingriffsstruktur auf der Unterseite auf eine leicht versetzte Achse B zentriert sind. Die Exzentrizität lässt sich nach Betrag und Richtung durch einen Vektor E kennzeichnen. Im gezeigten Beispiel verläuft dieser Vektor E parallel zu der geraden Kante der halbkreisförmigen Scheibe.

Verbinder der in Fig. 15 gezeigten Art ermöglichen es, die Verbinder und die mit ihnen verbundenen Bauteile miteinander zu verspannen, um beispielsweise ein etwaiges Spiel der Eingriffsstrukturen zu beseitigen.

Das Prinzip ist in Fig. 16 veranschaulicht. Fig. 16 (A) zeigt schematisch zwei rechteckige Bauteile 10, 12, die leicht versetzt aufeinander liegen, so dass das untere Bauteil 12 größtenteils verdeckt ist. Für beide Bauteile ist hier der Einfachheit halber jeweils nur eine einzige halbkreisförmige Eingriffsstruktur 16 gezeigt. Der halbkreisförmige Verbinder 22 ist in dem Zustand unmittelbar vor dem Eindrehen gezeigt, in dem seine gerade Kante an den miteinander fluchtenden Kanten der Bauteile 10 und 12 anliegt. In durchgezogenen Linien ist das Zentrum der Eingriffsstruktur auf der Oberseite des Verbinders gezeigt, während das Zentrum der Eingriffsstruktur auf der Unterseite gestrichelt eingezeichnet ist. Der Versatz zwischen den Bauteilen 10 und 12 entspricht der Exzentrizität der Eingriffsstrukturen des Verbinders 22.

Es soll nun angenommen werden, dass der Verbinder 22 im Gegenuhrzeigersinn in die Eingriffsstrukturen 16 eingedreht wird, wobei das untere Bauteil 12 festgehalten wird und die Drehung um das Zentrum der unteren Eingriffsstruktur (gestrichelt) erfolgt. Fig. 16 (B) zeigt die Situation nach einer Drehung um etwa 135°. Man erkennt, dass sich die beiden Bauteile 10, 12 in der Ebene ihrer Verbindungsflächen gegeneinander verschieben, und zwar auf einem Kreisbogen, dessen Radius der Exzentrizität E entspricht. Nach einer 180°-Drehung, wenn also der Verbinder 22 mit der Kante der Bauteile 10, 12 bündig ist, wäre das Bauteil 10 in der entgegengesetzten Richtung (im Vergleich zu Fig. 16 (A)) gegenüber dem Bauteil 12 versetzt.

Wenn die Bauteile durch zwei oder mehr Verbinder miteinander verbunden sind, lässt sich der oben beschriebene Effekt dazu nutzen, die Bauteile und die Verbinder miteinander zu verspannen. Wenn genau zwei Verbinder vorhanden sind, sollten deren Exzentrizitäten E entgegengesetzt gleich sein. Der Betrag der Exzentrizität ist in Fig. 15 und 16 übertrieben dargestellt und sollte in der Praxis etwa in der Größenordnung des Spiels zwischen den Rippen und Nuten der Eingriffsstrukturen liegen, so dass sich die Verbinder trotz der Exzentrizität noch in die Eingriffsstrukturen 16 der Bauteile eindrehen lassen. Der eine Verbinder hat dann die Tendenz, die Platten in einer Richtung zu verschieben, während der andere Verbinder die Tendenz hat, die Platten in der entgegengesetzten Richtung gegeneinander zu verschieben. Da die Bauteile jedoch starr sind, werden sie auf diese Weise miteinander verspannt.

Um das Einführen der exzentrischen Verbinder zu erleichtern, können auch die Eingriffsstrukturen in den beiden Bauteilen 10, 12 auch so ausgebildet sein, dass sie, wenn die beiden Bauteile 10, 12 bündig sind, leicht exzentrisch relativ zueinander liegen. Durch die Verschiebung der Bauteile beim Eindrehen eines einzelnen (exzentrischen) Verbinders würde diese Exzentrizität dann kompensiert oder gegebenenfalls überkompensiert, so dass man mit zwei oder mehr Verbindern wieder eine feste Verspannung der Bauteile erreicht.

Die Exzentrizitäten E können auch rechtwinklig oder unter irgend einem anderen Winkel relativ zu der Kante der Bauteile orientiert sein, in der die Eingriffsstrukturen 16 münden. Beispielsweise lässt sich bei der in Fig. 1 gezeigten Vorrichtung ein Verspannen der Bauteile 10 und 12 dadurch erreichen, dass die Exzentrizitäten der Verbinder 22, die in die sechs Seitenflächen des Bauteils eingedreht werden, abwechselnd eine Verschiebung der oberen Platte 10 nach innen und nach außen relativ zu der unteren Platte 12 bewirken würden. Wenn andererseits bei der Vorrichtung nach Fig. 1 die Exzentrizitäten E aller sechs Verbinder gleichsinnig in Umfangsrichtung weisen, lässt sich eine leichte relative Verdrehung der Bauteile 10 und 12 bewirken.

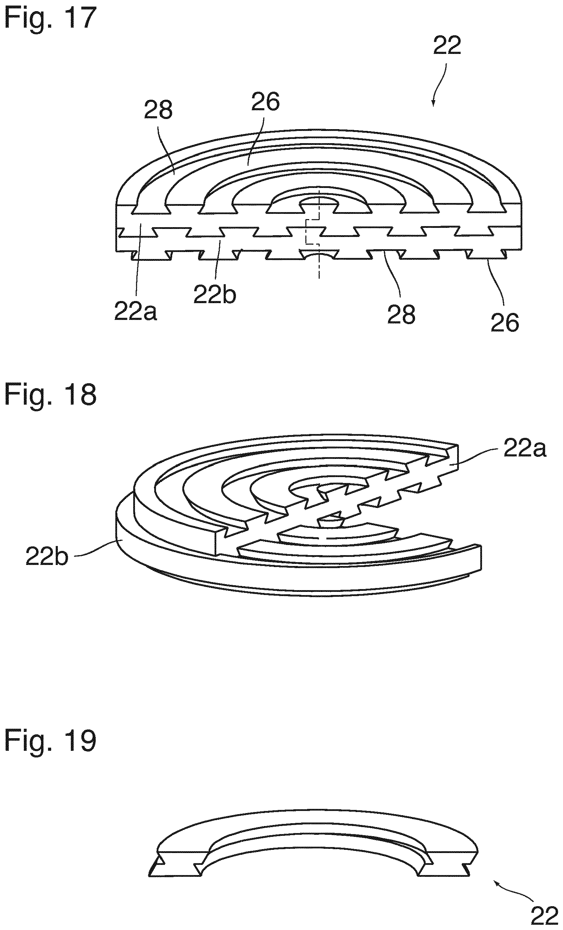

Fig. 17 zeigt einen mehrteiligen Verbinder 22 in der Form eines Doppelexzenters, der ähnlich wie der Verbinder in Fig. 14 aus zwei halbkreisförmigen Scheiben 22a und 22b aufgebaut ist. In diesem Fall sind jedoch die Eingriffsstrukturen an der Oberseite und der Unterseite jeder der beiden Scheiben exzentrisch angeordnet, wobei die Exzentrizitäten bei den Scheiben 22a und 22b entgegengesetzt gleich sind. In der in Fig. 17 gezeigten Stellung heben sich deshalb die Exzentrizitäten auf, so dass sich der Verbinder 22 als Ganzes wie ein einteiliger, nicht exzentrischer Verbinder verhält. Wenn jedoch die beiden Scheiben 22a und 22b gegeneinander verdreht werden, ergibt sich eine resultierende Exzentrizität, die die Tendenz hat, die beiden Bauteile gegeneinander zu verschieben, so dass sich im Zusammenwirken mit mindestens einem zweiten (exzentrischen oder nicht exzentrischen) Verbinder wieder eine Verspannung erreichen lässt.

Fig. 18 zeigt die beiden Scheiben 22a und 22b des Verbinders nach Fig. 17 in einer um etwa 90° gegeneinander verdrehten Position.

Wahlweise können die Scheiben 22a und 22b anstelle einer halbkreisförmigen Gestalt auch die Gestalt eines stumpfwinkligen Kreissektors mit einem Bogenwinkel von weniger als 180° haben, so dass sich der Verbinder auch dann, wenn die Scheiben leicht gegeneinander verdreht sind, noch vollständig innerhalb der Konturen der Bauteile 10, 12 unterbringen lässt.

Andererseits ist es auch möglich, einen Verbinder zu schaffen, bei dem die Scheiben 22a und 22b nicht als Halbkreise, sonders als Vollkreise ausgebildet sind. Um die Verbindung zu den Bauteilen 10, 12 herzustellen, wären dann zwei zusätzliche halbkreisförmige (oder kreissektorförmige) Verbinder erforderlich, die mit den Nuten 28 in den Außenflächen der Scheiben 22a und 22b in Eingriff stehen und somit in diesen (vollkreisförmigen) Nuten drehbar sind, so dass sie sich in die Eingriffsstrukturen 16 der Bauteile 10, 12 eindrehen lassen. Diese Lösung hat den Vorteil, dass sich das Ausmaß der Exzentrizität durch Verdrehung der Scheiben 22a, 22b relativ zueinander einstellen lässt, ohne dass sich die Winkelstellung der halbkreisförmigen Verbinder in den Eingriffsstrukturen 16 ändert. Eine relative Verschiebung der Bauteile bzw. ein Verspannen kann dann herbeigeführt werden, indem die Scheiben 22a, 22b gemeinsam relativ zu den halbkreisförmigen Verbindern gedreht werden, wiederum ohne dass sich die Winkelstellung der halbkreisförmigen Verbinder in den Eingriffsstrukturen 16 ändert. Allerdings werden die vollkreisförmigen Scheiben 22a, 22b auch bei fertiggestellter Verbindung über die Kontur der verbundenen Bauteile 10, 12 überstehen.

Wenn die Nuten 28 nicht hinterschnitten sind, lassen sich die halbkreisförmigen Verbinder auch noch nachträglich in die Scheiben 22a, 22b einsetzen. Andernfalls müssen die vollkreisförmigen Scheiben 22a, 22b zu-nächst als zwei getrennte Hälften hergestellt werden, in die dann die halbkreisförmigen Verbinder eingedreht werden, bevor die beiden Hälften zu dem Vollkreis zusammengefügt werden.

Fig. 19 illustriert, dass ein exzentrischer (in diesem Fall einteiliger) Verbinder auch die Form eines einzelnen Halbrings haben kann, wie er in ähnlicher Form in Fig. 2 gezeigt ist.

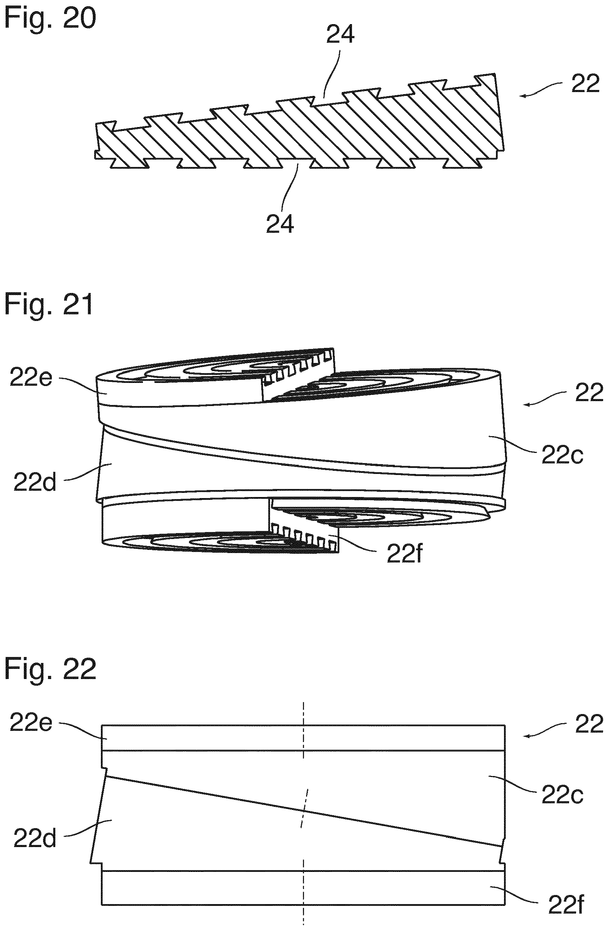

Eine andere Möglichkeit, die Bauteile verspannend miteinander zu verbinden, besteht darin, dass statt mit exzentrischen Verbindern mit keilförmigen Verbindern gearbeitet wird. Ein Beispiel eines (übertrieben) keilförmigen Verbinders 22 ist in Fig. 20 gezeigt. In der Praxis sollte die Dickenänderung des Verbinders wieder in der Größenordnung des Spiels der Eingriffsstrukturen 24 in den Eingriffsstrukturen 16 der Bauteile 10, 12 liegen, oder die Ebenen der Eingriffsstrukturen 16 in den Bauteilen 10, 12 sollten ihrerseits etwas schräg zu den Verbindungsflächen 14 stehen, damit sich der Verbinder 22 eindrehen lässt. Wenn der Verbinder 22 dann weiter eingedreht wird, so führt die Keilform zu einem Verkippen und zu einer taumelförmigen Relativbewegung der Bauteile 10, 12. Die Verspannung wird dann dadurch erreicht, dass man mindestens zwei Verbinder benutzt, die die Tendenz haben, die Bauteile in voneinander verschiedene Richtungen zu verkippen.

Fig. 21 illustriert für diese Variante eine Ausführungsform eines zusammengesetzten Verbinders mit zwei als Vollkreise ausgebildeten und miteinander in Eingriff stehenden keilförmigen Scheiben 22c, 22d, die jeweils drehbar mit einem weiteren Verbinder in der Form einer Halbkreisscheibe 22e, 22f in Eingriff stehen. Die Scheiben 22e und 22f haben an den Außenflächen Eingriffsstrukturen, die die Verbindung zu den Eingriffstrukturen 16 der Bauteile 10, 12 herstellen.

Fig. 22 zeigt diesen Verbinder in einem Zustand, in dem die keilförmigen Scheiben 22c, 22d gerade so weit gegeneinander verdreht sind, dass sich ihre Keilformen gegenseitig aufgeben, so dass die Achsen der halbkreisförmigen Scheiben 22e und 22f miteinander fluchten. In diesem Fall können die beiden Scheiben 22c und 22d gemeinsam gedreht werden, ohne dass die Achsen der Scheiben 22e und 22f taumeln und ohne dass die damit verbundenen Bauteile 10, 12 gegeneinander verkippt werden. Wenn jedoch die Scheiben 22c und 22d relativ zueinander gedreht werden, so bilden die Achsen der Scheiben 22e und 22f einen (kleinen) Winkel miteinander, und entsprechend werden die Bauteile 10, 12 verkippt oder verspannt.

Anders als bei den exzentrischen Verbindern gilt in diesem Fall, dass mit zwei oder mehr keilförmigen Verbindern eine Verspannung der Bauteile auch dann erreicht wird, wenn alle Verbinder die Tendenz haben, Bauteile relativ zueinander um den gleichen Winkel und in der gleichen Richtung zu kippen. Der Grund besteht darin, dass eine reale Verkippung der beiden Bauteile relativ zueinander zu einer Änderung des Abstands zwischen den Verbindungsflächen 14 führt, dieser Abstand jedoch andererseits durch die Konfiguration der einzelnen Verbinder 22 bereits bestimmt ist. Allerdings führt die relative Verdrehung der Scheiben 22c und 22d nicht nur zu einem Verkippen der Achsen, sondern auch zu einer Änderung der effektiven Dicke des mehrteiligen Verbinders. Bei Verwendung mehrerer Verbinder lässt sich deshalb wahlweise die Anordnung auch so wählen, dass die Verkippung und die Abstandsänderung zu einander passen und statt einer Verspannung eine reale Verkippung der Bauteile relativ zu einander erreicht wird, etwa um Fehlausrichtungen zu korrigieren.

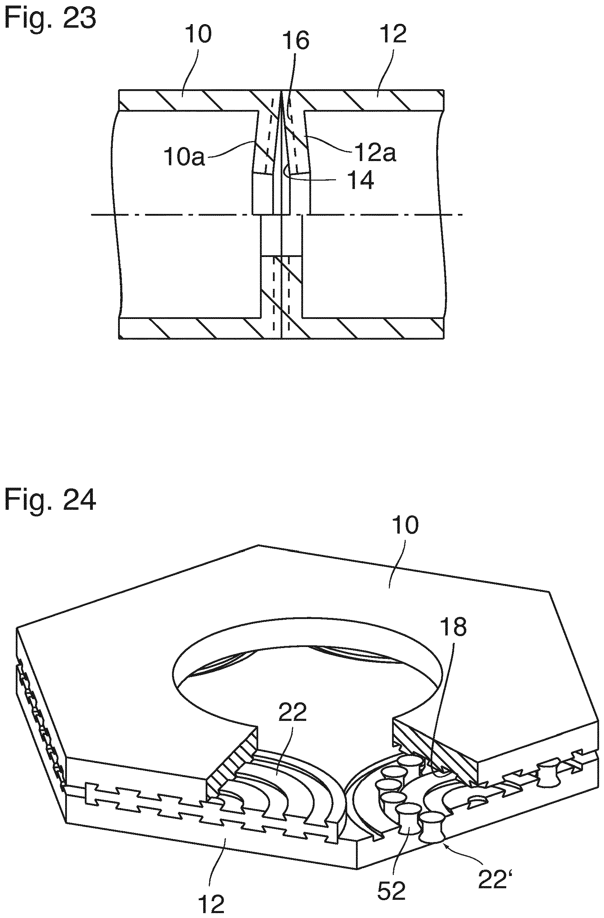

Eine weitere Möglichkeit zum verspannenden Verbinden zweier Bauteile 10, 12 ist in Fig. 23 gezeigt. Die Bauteile 10, 12 haben in diesem Beispiel die Form von Hohlprofilen, die an den einander zugewandten Enden jeweils einen Flansch 10a, 12a aufweisen. Die einander zugewandten Flächen dieser Flansche bilden die Verbindungsflächen 14, in denen die (hier nur schematisch gezeigten),jetzt notwendig hinterschnittenen Eingriffsstrukturen 16 für die (nicht gezeigten) Verbinder gebildet sind. Im oberen Teil der

Fig. 23 sind die Flansche 10a, 12a im unbelasteten Zustand gezeigt. In diesem Zustand nehmen die Flansche eine Position ein, in der ihre Verbindungsflächen 14 leicht auseinander klaffen. In der unteren Hälfte der Fig. 23 sind die Flansche dagegen in dem Zustand gezeigt, in dem ihre Verbindungsflächen mit einer gewissen Kraft gegeneinander angedrückt werden. In diesem Zustand lassen sich die Verbinder eindrehen, so dass sie mit ihren hinterschnittenen Eingriffsstrukturen die Flansche im aneinander anliegenden Zustand halten. Da die inneren Enden der Flansche die Tendenz haben, in die in der oberen Hälfte in Fig. 23 gezeigte Position zurückzufedern, werden die Verbinder unter Spannung gehalten und die äußeren Enden der Flansche - und damit die Bauteile 10, 12 insgesamt - fest gegeneinander gedrückt.

Fig. 24 zeigt eine Ausführungsform, die sich von der Ausführungsform nach Fig. 1 dadurch unterscheidet, dass einer der halbkreisscheibenförmigen Verbinder 22 durch einen Verbinder 22' ersetzt ist, der durch eine Vielzahl doppelkonischer Rollen 52 gebildet wird, die jeweils mit einem konisch erweiterten Ende in die hinterschnittene Nut 18 der Eingriffsstruktur des Bauteils 10 und mit dem anderen konisch erweiterten Ende in die entsprechende hinterschnittene Nut der Eingriffsstruktur des anderen Bauteils 12 eingreifen. Um diesen Verbinder 22' in die Eingriffsstrukturen 16 "einzudrehen" werden einfach die Rollen 52 nacheinander vom offenen Ende her in die Nuten eingedrückt, so dass sie jeweils die zuvor eingeführten Rollen weiter schieben.

Selbstverständlich können entsprechende Rollen 52 auch in die übrigen Nuten der Eingriffsstrukturen 16 eingeführt werden, und es können Verbinder dieses Typs für sämtliche Eingriffsstrukturen der Bauteile 10 und 12 verwendet werden. Der Vorteil besteht darin, dass sich die Rollen 52 rationell fertigen lassen, und es ermöglichen, Verbinder mit unterschiedlicher Form und Größe zu schaffen. Statt die Rollen 52 lose in die Nuten einzuführen, ist es auch möglich, die Rollen auf eine Kordel aufzufädeln oder ähnlich wie Kugeln eines Kugellagers in einem gemeinsamen Käfig zu lagern. Anstelle von Rollen können auch anders geformte Körper verwendet werden.

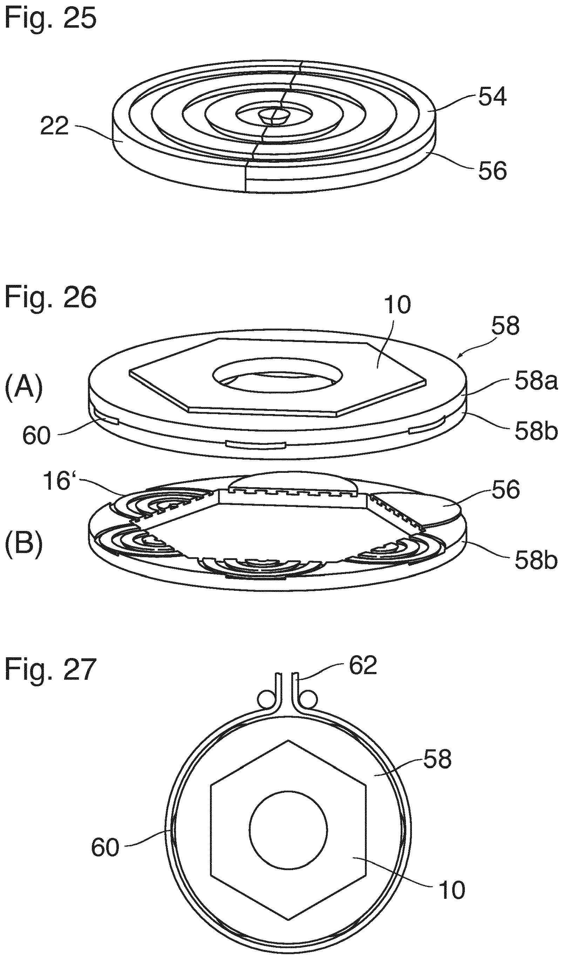

Bei den bisher beschriebenen Ausführungsbeispielen bleiben die Nuten 18 der Eingriffsstrukturen offen, wenn noch keine Verbinder in sie eingeführt wurden. Wenn dies aus ästhetischen Gründen unerwünscht ist, kann eine Kombination aus einem halbkreisscheibenförmigen Verbinder 22 und zwei Füllstücken 54, 56 verwendet werden, wie sie in Fig. 25 gezeigt ist. Die Füllstücke 54, 56 sind ebenfalls halbkreisförmig und haben die gleichen Eingriffsstrukturen wie der Verbinder 22, weisen jedoch nur die Hälfte der Dicke des Verbinders 22 auf und weisen auf der der Eingriffsstruktur entgegengesetzten Seite jeweils eine ebene halbkreisförmige Oberfläche auf. In dem in Fig. 25 gezeigten Zustand liegen die Füllstücke mit diesen ebenen Oberflächen aneinander an, so dass sie den Verbinder 22 zu einem Vollkreis komplettieren.

Die Füllstücke 54, 56 lassen sich anstelle des Verbinders 22 in die Eingriffsstrukturen 16 der Bauteile 10 und 12 eindrehen, so dass die Eingriffsstrukturen aufgefüllt werden, ohne dass jedoch die Bauteile tatsächlich miteinander verbunden werden. Wenn es dann erwünscht ist, mit Hilfe des Verbinders 22 die Verbindung herzustellen, so wird der Verbinder 22 in üblicher Weise in die Eingriffsstrukturen hineingedreht, wodurch gleichzeitig die beiden Füllstücke 54, 56 aus den Eingriffsstrukturen herausgedrückt werden.

Umgekehrt ist es möglich, den Verbinder 22 wieder aus den Eingriffsstrukturen 16 zu lösen, indem an seiner Stelle wieder die Füllstücke 54, 56 eingedreht werden.

Um das Einführen des Verbinders 22 und/oder der Füllstücke 54, 56 in die Eingriffsstrukturen 16 zu erleichtern, können der Verbinder 22 und die Füllstücke 54, 56 an ihren Enden ineinandergreifende Zentrierstifte und -löcher aufweisen. Gegebenenfalls können der Verbinder 22 und die Füllstücke 54, 56 auch an ihrer äußeren Umfangsfläche geriffelt sein, so dass sich diese Bauteile, die sich zu einer Vollkreisscheibe ergänzen, leichter in den Eingriffsstrukturen drehen lassen, indem mit dem Daumen der jeweils aus der Kantenfläche der Bauteile 10, 12 vorspringende Teil der Vollkreisscheibe gedreht wird. Insofern können die Füllstücke 54, 56 auch als Montagehilfe genutzt werden.

Eine Weiterbildung dieses Gedankens ist in Fig. 26 und 27 illustriert.

Fig. 26 (A) zeigt in einer perspektivischen Ansicht einen ringförmigen Rahmen 58, der die beiden miteinander zu verbindenden oder bereits verbundenen Bauteile 10, 12 (hier ist nur das Bauteil 10 sichtbar) umschließt. Der Rahmen 58 ist aus zwei flach aufeinander aufliegenden Scheiben 58a, 58b aufgebaut. Die untere Scheibe 58b ist in Fig. 26 (B) gesondert dargestellt. Man erkennt, dass diese Scheibe in ihrer oberen Oberfläche Eingriffsstrukturen 16' aufweist, die den Eingriffsstrukturen 16 der Bauteile 10, 12 entsprechen. Jede Eingriffsstruktur 16' bildet mit einer zugehörigen Eingriffsstruktur 16 des Bauteils 10 oder 12 ein System aus Nuten und Rippen in der Form von konzentrischen Vollkreisen, die jedoch an der Außenfläche der Bauteile 10, 12 und an der daran anliegenden Innenfläche des Rahmens 58 in zwei Halbkreise geteilt sind. In diese Struktur kann nun die in Fig. 25 gezeigte Anordnung aus Verbinder 22 und Füllstücken 54, 56 eingesetzt werden. Beispielsweise können, wie in Fig. 26B für zwei der Eingriffsstrukturen gezeigt ist, die Füllstücke 56 in die Eingriffsstrukturen 16' eingedreht werden, während der Rahmen 58 noch von den Bauteilen 10, 12 getrennt ist.

Es soll nun angenommen werden, dass die Bauteile 10, 12 durch die Verbinder 22 miteinander verbunden sind. Wenn diese Verbindung gelöst werden soll, so kann man den Rahmen 58 mit den eingesetzten Füllstücken 54, 56 über die verbundenen Bauteile 10, 12 schieben, so dass sich die Verbinder 22 und die Füllstücke 54, 56 jeweils zu einem Vollkreis ergänzen. Wie in Fig. 26 (A) und Fig. 27 zu erkennen ist, stehen die äußeren Umfangsränder 60 der so gebildeten Vollkreisscheiben etwas über den äußeren Umfang des Rahmens 58 über. Diese überstehenden Umfangsränder 60 können daher als Drehhandhabe dienen, um sämtliche Vollkreisscheiben synchron zu drehen. Wenn alle Vollkreisscheiben um 180° gedreht wurden, sind die Füllstücke 56, 58 in den Eingriffsstrukturen 16 der Bauteile 10, 12 aufgenommen, so dass diese Bauteile nun voneinander getrennt sind, während umgekehrt die Verbinder 22 in den Eingriffsstrukturen 16' der Scheiben 58a und 58b aufgenommen sind und nunmehr diese Scheiben miteinander verbinden. Der Rahmen 58 lässt sich dann bei Bedarf als eine Einheit von den lose aufeinanderliegenden Bauteilen 10, 12 abziehen.

Durch Umkehrung der oben beschriebenen Abläufe lassen sich die Bauteile 10 und 12 ebenso einfach wieder miteinander verbinden.

Für den synchronen Antrieb der Füllstücke und Verbinder können geeignete Antriebsmechanismen vorgesehen werden. Beispielsweise können die Umfangsränder 60 der aus den Verbindern und Füllstücken gebildeten Vollkreisscheiben als Zahnkränze ausgebildet sein, die mit einem Zahnriemen 62 (Fig. 27) kämmen, der den Rahmen 58 an seinem äußeren Umfang umschlingt. Wahlweise können diese Zahnkränze auch mit einem Hohlrad kämmen, das den Rahmen 58 umgibt. Ebenso ist es möglich, im Inneren der Bauteil 10, 12 ein Sonnenrad anzuordnen, das drehbar auf einer Achse sitzt, die die Bauteile 10, 12 längs ihrer Mittelachse durchsetzt, und das mit den gezahnten Umfangsrändem 60 wie bei einem Planetengetriebe kämmt.

Durch jeden dieser Antriebsmechanismen erhält man im Ergebnis eine Schnellkupplung, mit der sich die Bauteile 10, 12 schnell und einfach und dennoch sicher miteinander verbinden und ebenso einfach wieder lösen lassen.

## Patentansprüche

1. Verbindung von zwei Bauteilen (10, 12), die Eingriffsstrukturen (16) an zwei einander zugewandten Verbindungsflächen (14) aufweisen, wobei die Bauteile (10, 12) mindestens zwei Paare von einander gegenüberliegenden kreisförmigen Eingriffsstrukturen (16) aufweisen, die sich jeweils über einen Bogenwinkel von nicht mehr als 180° erstrecken, jeweils mindestens ein offenes Ende haben und so angeordnet sind, dass der Kreisbogenmittelpunkt der Eingriffsstruktur eines Paares vom Kreisbogenmittelpunkt der Eingriffsstruktur jedes anderen Paares verschieden ist, und mindestens zwei Verbinder (22) vorgesehen sind, die jeweils zu den Eingriffsstrukturen (16) eines Paares komplementäre Eingriffsstrukturen (24) aufweisen, **dadurch gekennzeichnet, dass** die kreisförmigen Eingriffsstrukturen (16) in den Verbindungflächen liegen und dass die Verbinder (22) von den offenen Enden her in die beiden Eingriffsstrukturen (16) des Paares hineindrehbar sind.

2. Verbindung nach Anspruch 1, bei der die Eingriffsstrukturen (16) der Bauteile (10, 12) mit beiden Enden zu einer Kantenfläche des betreffenden Bauteils (10, 12) hin offen sind.

3. Verbindung nach Anspruch 2, bei der die Verbinder (22) kreissektorförmig sind und einerseits durch einen Kreisbogen und andererseits durch eine Kante begrenzt werden, die so geformt ist, dass sie, wenn der Verbinder ganz in die Eingriffsstrukturen (16) eingedreht ist, mit einer gemeinsamen Kantenfläche der Bauteile (10, 12) bündig ist.

4. Verbindung nach einem der vorstehenden Ansprüche, bei der die Eingriffsstrukturen (16) der Bauteile (10, 12) und die dazu komplementären Eingriffsstrukturen (24) der Verbinder (22) jeweils eine Abfolge von konzentrischen Nuten (18, 28) und Rippen (20, 26) aufweisen.

5. Verbindung nach einem der vorstehenden Ansprüche, bei der die Eingriffsstrukturen (16) der Bauteile (10, 12) und die dazu komplementären Eingriffsstrukturen (24) der Verbinder (22) jeweils mindestens eine hinterschnittene Nut (18, 28) und eine dazu komplementäre Rippe (20, 26) aufweisen.

6. Verbindung nach einem der vorstehenden Ansprüche, bei mit mindestens einem Verbinder (24), bei dem die zu den Eingriffsstrukturen (16) des einen Bauteils (10) komplementären Eingriffsstrukturen (24) und die zu den Eingriffsstrukturen (16) des anderen Bauteils (12) komplementären Eingriffsstrukturen (24) exzentrisch zueinander angeordnet sind.

7. Verbindung nach einem der vorstehenden Ansprüche, mit mindestens einem Verbinder (22), der derart keilförmig gestaltet ist, dass seine Eingriffsstrukturen (24), die zu den Eingriffsstrukturen (16) der beiden Bauteile (10, 12) komplementär sind, in zueinander geneigten Ebenen liegen.

8. Verbindung nach einem der vorstehenden Ansprüche, bei der mindestens ein Verbinder (22) ein mehrteiliger Verbinder ist, der zwei über drehbar ineinander eingreifende Eingriffsstrukturen miteinander verbundene Scheiben (22a, 22b; 22c, 22d) aufweist.

9. Verbindung nach einem der vorstehenden Ansprüche, bei der mindestens ein Paar gegenüberliegender Eingriffsstrukturen (16) der Bauteile (10, 12) an Flanschen (10a, 12a) gebildet sind, die derart vorgespannt sind, dass ihre Verbindungsflächen (14) auseinander klaffen, solange sie nicht durch einen zugehörigen Verbinder (22) verbunden sind.

10. Verbindung nach einem der vorstehenden Ansprüche, mit mindestens einem Verbinder (22'), der durch eine Folge von lose aneinander anliegenden oder flexibel miteinander verbundenen Körpern (52) gebildet wird, die mit einem Ende in den Querschnitt einer Nut (18) der Eingriffsstruktur (16) des einen Bauteils und mit dem anderen Ende in eine Nut (18) der Eingriffsstruktur des anderen Bauteils (12) eingreifen.

11. Verbindung nach einem der vorstehenden Ansprüche, mit mindestens einem Füllstück (54), das eine zu einer Eingriffsstruktur (16) eines der Bauteile (10, 12) komplementäre Form hat und anstelle des Verbinders (22) in diese Eingriffsstruktur eindrehbar ist.

12. Verbindung nach Anspruch 11, bei der ein Verbinder (22) und zwei in Richtung der Dicke des Verbinders (22) aufeinander gestapelte Füllstücke (54, 56) einander zu einer Vollkreisscheibe ergänzen.

13. Verbindung nach Anspruch 12, mit einem die Bauteile (10, 12) umschließenden Rahmen (58), der zu den Bauteilen (10, 12) hin offene Eingriffsstrukturen (16') aufweist, in welche wahlweise die Verbinder (22) oder die diese zu den Vollkreisscheiben ergänzenden Füllstücke (54, 56) hineindrehbar sind.

14. Verbindung nach Anspruch 13, mit einem Antriebsmechanismus (62) für den synchronen Antrieb der in den Bauteilen (10, 12) und dem Rahmen (58) drehbaren Vollkreisscheiben.

## Claims

1. A connection of two construction components (10, 12) that are have engagement structures (16) on two connection surfaces (14) that are facing each other, wherein the components (10, 12) have at least two pairs of oppositely disposed circular arc-shaped engagement structures (16) each of which extends over an angle of not more than 180° and has at least one open end, the engagement structures being arranged such that the centre of the circular arc of the engagement structure of one pair is different from the centre of the circular arc of the engagement structure of each other pair, and at least two connectors (22) are provided, each of which has engagement structures (24) complementary to the engagement structures (16) of one pair, **characterized in that** the circular engagement structures (16) are formed in the connection surfaces, and the connectors (22) are adapted to be inserted in a rotary movement into the two engagement structures (16) pf the pair from the open ends.

2. The connection according to claim 1, wherein the engagement structures (16) of the components (10, 12) are open at both ends towards an edge surface of the corresponding components (10, 12).

3. The connection according to claim 2, wherein the connectors (22) are sector shaped and bounded to one part by a circular arc and to another part by an edge that is shaped such that, when the connector is completely accommodated in the engagement structures (16), it is flush with a common edge surface of the components (10, 12).

4. The connection according to any of the preceding claims, wherein the engagement structures (16) of the components (10, 12) and the complementary engagement structures (24) of the connectors (22) each comprise a sequence of concentric grooves (18, 28) and ribs (20, 26).

5. The connection according to any of the preceding claims, wherein the engagement structures (16) of the components (10, 12) and the complementary engagement structures (24) of the connectors (22) each comprise at least one undercut groove (18, 28) and a rib (20, 26) complementary thereto.

6. The connection according to any of the preceding claims, comprising at least one connector (22) in which the complementary engagement structures (24) that are complementary to the engagement structures (16) of the one component (10), and the complementary engagement structures (24) that are complementary to the engagement structures (16) of the other component (12) are arranged to be eccentric relative to one another.

7. The connection to any of the preceding claims, comprising at least one connector (22) that is wedge-shaped, such that its complementary engagement structures (24) that are complementary to the engagement structures (16) of the two components (10, 12) are formed in planes that are inclined relative to one another.

8. The connection according to any of the preceding claims, wherein at least one connector (22) is a multi-part connector having two disks (22a, 22b; 22c, 22d) that are connected to one another by rotatable inter-engaging engagement structures.

9. The connection according to any of the preceding claims, wherein at least one pair of oppositely disposed engagement structures (16) of the components (10, 12) is formed on flanges (10a, 12b) that are biased such that their connection surfaces (14) flare apart as long as they are not connected by an associated one of the connectors (22).

10. The connection according to any of the preceding claims, comprising at least one connector (22') that is formed by a sequence of loosely engaging or flexibly interconnected bodies (52) each of which has one end received in the cross-section of a groove (18) of the engagement structure (16) of one component, and another end received in a groove (18) of the engagement structure of the other component (12).

11. The connection according to any of the preceding claims, comprising at least one filler body (54) that has a shape complementary to an engagement structure (16) of one of the components (10, 12) and is adapted to be inserted into that engagement structure in place of the connector (22).

12. The connection according to claim 11, wherein the connector (22) and two filler bodies (54, 56) stacked one upon the other in the direction of the thickness of the connector (22) are configured to supplement each other to form a full-circular disk.

13. The connection according to claim 12, comprising a frame (58) that encircles the components (10, 12) and has engagement structures (16') that are open towards the components (10, 12) and adapted to receive, upon choice of the user, either the connectors (22) or the filler bodies (54, 56) that supplement the connectors.

14. The connection according to claim 13, comprising a drive mechanism (62) for synchronously driving the full-circular disks that are rotatable in the components (10, 12) and the frame (58).

## Revendications

1. Assemblage de deux éléments de construction (10, 12) comportant des structures de prise (16) sur deux surfaces d'assemblage dirigées l'une vers l'autre (14), dans lequel les éléments de construction (10, 12) comportent au moins deux paires de structures de prise circulaires (16) opposées l'une à l'autre, qui s'étendent respectivement sur un angle non supérieur à 180°, ayant chacun au moins une extrémité ouverte et agencés de telle sorte que le centre de l'arc circulaire de la structure de prise d'une paire est différent du centre d'arc de cercle de la structure de prise de chaque autre paire, et au moins deux éléments d'assemblage (22) sont prévus, lesquels éléments d'assemblage comportent respectivement des structures de prise (24) complémentaires des structures de prise (16) d'une paire, **caractérisé en ce que** les structures de prise circulaires (16) se situent dans les surfaces d'assemblage et **en ce que** les éléments d'assemblage (22) peuvent tourner dans les deux structures de prise (16) de la paire à partir des extrémités ouvertes.

2. Assemblage selon la revendication 1, dans lequel les structures de prise (16) des éléments de construction (10, 12) sont ouvertes aux deux extrémités vers une surface de bord de l'élément de construction (10, 12) correspondant.

3. Assemblage selon la revendication 2, dans lequel les éléments d'assemblage (22) sont en forme de secteur circulaire et sont délimités d'une part par un arc de cercle et d'autre part par un bord qui est formé de telle sorte que, lorsque l'élément d'assemblage tourne entièrement dans les structures de prise (16), il affleure une surface de bord commune des éléments de construction (10, 12).

4. Assemblage selon l'une des revendications précédentes, dans lequel les structures de prise (16) des éléments de construction (10, 12) et les structures de prise (24) complémentaires de celles-ci des éléments d'assemblage (22) comportent chacune une série de rainures concentriques (18, 28) et de nervures (20, 26).

5. Assemblage selon l'une des revendications précédentes, dans lequel les structures de prise (16) des éléments de construction (10, 12) et les structures de prise (24) complémentaires de celles-ci des éléments d'assemblage (22) comportent respectivement au moins une rainure entaillée (18, 28) et une nervure (20, 26) complémentaire de celle-ci.

6. Assemblage selon l'une des revendications précédentes, comportant au moins un élément d'assemblage (24) dans lequel les structures de prise (24) complémentaires des structures de prise (16) du premier élément de construction (10) et les structures de prise (24) complémentaires des structures de prise (16) de l'autre élément de construction (12) sont agencées de manière excentrée les unes par rapport aux autres.

7. Assemblage selon l'une des revendications précédentes, comportant au moins un élément d'assemblage (22) qui est en forme de coin de sorte que ses structures de prise (24) complémentaires des structures de prise (16) des deux éléments de construction (10, 12) se situent dans des plans inclinés l'un par rapport à l'autre.

8. Assemblage selon l'une des revendications précédentes, dans lequel au moins un élément d'assemblage (22) est un élément d'assemblage en plusieurs parties comportant deux disques (22a, 22b ; 22c, 22d) assemblés l'un à l'autre par l'intermédiaire de structures de prise en prise rotative l'une dans l'autre.

9. Assemblage selon l'une des revendications précédentes, dans lequel au moins une paire de structures de prise opposées (16) des éléments de construction (10, 12) est formée sur des rebords (10a, 12a) qui sont précontraints de telle sorte que leurs surfaces d'assemblage (14) s'écartent l'une de l'autre tant qu'elles ne sont pas assemblées par un élément d'assemblage (22) correspondant.

10. Assemblage selon l'une des revendications précédentes, comportant au moins un élément d'assemblage (22') formé par une série de corps (52) mutuellement en contact de manière lâche ou mutuellement reliés de manière souple, lesquels corps sont reçus, au niveau d'une extrémité, dans la section transversale d'une rainure (18) de la structure de prise (16) du premier élément de construction et, au niveau de l'autre extrémité, dans une rainure (18) de la structure de prise de l'autre élément de construction (12).

11. Assemblage selon l'une des revendications précédentes, comportant au moins une pièce de remplissage (54) ayant une forme complémentaire d'une structure de prise (16) du premier élément de construction (10, 12) et pouvant tourner dans cette structure de prise à la place de l'élément d'assemblage (22).

12. Assemblage selon la revendication 11, dans lequel un élément d'assemblage (22) et deux pièces de remplissage (54, 56) empilées l'une sur l'autre en direction de l'épaisseur de l'élément d'assemblage (22) se complètent mutuellement pour former un disque entièrement circulaire.

13. Assemblage selon la revendication 12, comportant un châssis (58) entourant les éléments de construction (10, 12) et comportant des structures de prise (16') ouvertes vers les éléments de construction (10, 12), dans lequel les éléments d'assemblage (22) ou les pièces de remplissage (54, 56) complétant les disques entièrement circulaires peuvent être sélectivement insérés par rotation.

14. Assemblage selon la revendication 13, comportant un mécanisme d'entraînement (62) pour l'entraînement synchrone des disques entièrement circulaires pouvant tourner dans les éléments de construction (10, 12) et le châssis (58).
